# EUROPÄISCHE PATENTSCHRIFT

(11) **EP 0 536 495 B1**
(45) Veröffentlichungstag und Bekanntmachung des Hinweises auf die Patenterteilung: **22.05.1996**
(21) Anmeldenummer: 92113175.1
(22) Anmeldetag: 03.08.1992
(51) Int. Cl.: G21C 17/00

(54) **Vorrichtung zur Überwachung der Atmosphäre innerhalb des Sicherheitsbehälters einer Reaktoranlage**
Equipment for monitoring the atmosphere within the safety containment of a reactor installation
Installation de surveillance de l'atmosphère dans l'enceinte de confinement d'un réacteur

(30) Priorität: 30.09.1991 CH 2886/91
(43) Veröffentlichungstag der Anmeldung: 14.04.1993
(73) Patentinhaber: ASEA BROWN BOVERI AG, CH-5401 Baden (CH)
(72) Erfinder: Schegk, Claus-Detlef, CH-5313 Klingnau (CH)

(56) Entgegenhaltungen:
- DE-A- 3 637 845
- PATENT ABSTRACTS OF JAPAN vol. 13, no. 200 (P-869)(3548) 12. Mai 1989 & JP-A-10 20 496
- PATENT ABSTRACTS OF JAPAN vol. 13, no. 185 (P-865)(3533) 2. Mai 1989 & JP-A-1 013 489
- PATENT ABSTRACTS OF JAPAN vol. 1, no. 128 (M-043) 24. Oktober 1977 & JP-A-52 064 591
- PATENT ABSTRACTS OF JAPAN vol. 8, no. 223 (P-307)(1660) 12. Oktober 1984 & JP-A-59 104 584
- PATENT ABSTRACTS OF JAPAN vol. 14, no. 44 (P-996)(3987) 26. Januar 1990 & JP-A-1 276 087
- PATENT ABSTRACTS OF JAPAN vol. 3, no. 155 (E-160) 19. Dezember 1979 & JP-A-54 135 595

## Beschreibung

### Technisches Gebiet

Die Erfindung betrifft eine Vorrichtung zur Überwachung der Atmosphäre innerhalb des Sicherheitsbehälters einer Reaktoranlage, wobei im Sicherheitsbehälter eine Probeentnahme vorgesehen ist, aus der Gasgemisch über eine Messleitung durch eine Messstrecke geleitet und anschliessend verworfen wird.

### Stand der Technik

Die Atmosphäre im Sicherheitsbehälter einer Kernkraftanlage besteht in der Regel aus Luft, Wasserdampf, Wasserstoff, CO₂, Edelgasen, Jod und Aerosolen. Im Normalbetrieb der Anlage wird dieses Gemisch, welches eine Aktivität von ca. 10³ Bq/m³ aufweist, aus dem Sicherheitsbehälter über eine Belüftungsanlage direkt in den Kamin abgeleitet. Im Störfall mit kleiner Leckage im Primärsystem, bei welcher die Aktivität zwischen 10³ Bq/m³ und 10⁸ Bq/m³ beträgt, wird das Gas ebenfalls über die Belüftungsanlage direkt in den Kamin abgeleitet. Bei einem grösseren Störfall mit beispielsweiser Kernschmelze kann die Aktivität grösser als 10¹⁴ Bq/m³ werden. Die Belüftungsanlage wird beim grösseren Störfall abgesperrt, worauf der Druck im Sicherheitsbehälter ansteigt. Zur Vermeidung eines zu hohen Druckanstiegs wird der Sicherheitsbehälter über eine Filteranlage entlastet. In dieser Filteranlage (bspw. Trockenfilter, Nassfilter) wird die Aktivität von Jod und Aerosolen um mindestens den Faktor 1000 herabgesetzt. Stromabwärts der Filteranlage wird danach die Aktivität des Gases in einer Messstrecke bestimmt.

Wegen verbleibender sehr hoher Aktivität in der anschliessenden, zum Kamin führenden Reingasleitung können im Störfall die für den Normalbetrieb verwendeten Messapparaturen wie Bilanzierungsfilter und Aerosolmonitor nicht eingesetzt werden, da der Messbereich überschritten würde und die Handhabung des Bilanzierungsfilters nicht gewährleistet wäre. Deshalb gelangen üblicherweise Sonderinstrumente mit einem höheren Messbereich und aufwendigen Abschirmungen sowie komplizierte Vorrichtungen für die Handhabung des Bilanzierungsfilters zur Anwendung.

Bei einem Störfall bietet es sich an, die Atmosphäre auch im Innern des Sicherheitsbehälters zu überwachen, solange die Druckentlastung noch nicht in Betrieb ist, um ein Mass über die ansteigende und zu erwartende Aktivität zu erhalten. Auch in diesem Fall ist die Aktivität des Probegases für die im Normalbetrieb verwendeten Auswertegeräte zu hoch.

### Darstellung der Erfindung

Die Erfindung versucht diese Nachteile zu vermeiden. Ihr liegt ihr Aufgabe zugrunde, bei einer Anlage der eingangs genannten Art auch im Störfall die Anlage mit den vorhandenen Messinstrumenten und Apparaten zu betreiben.

Erfindungsgemäss wird dies dadurch erreicht, dass die Akivitätskonzentration des Gases vor der Messstrecke in einer Verdünnungsanlage reduziert wird.

Die Vorteile der Erfindung sind unter anderem im Wegfall der bisher üblichen starken Abschirmungen der gesamten Messstrecke zu sehen. Auch die Abschirmung für den Transport des zu vermessenden Bilanzierungsfilters entfällt, wodurch die Gefährdung des Betriebspersonals stark reduziert ist.

### Kurze Beschreibung der Zeichnung

In der Zeichnung ist ein Ausführungsbeispiel der Erfindung anhand des abluftseitigen Teils einer Druckwasser-Reaktoranlage dargestellt.
Es zeigen:
- Fig.1: ein vereinfachtes Schaltbild eines abluftseitigen Teils einer Reaktoranlage;
- Fig.2: die Prinzipskizze einer Verdünnungsstufe.

Es sind nur die für das Verständnis der Erfindung wesentlichen Elemente gezeigt. Nicht dargestellt sind von der Reaktoranlage beispielsweise die ganzen Primär- und Sekundärteile. Die Strömungsrichtung der Arbeitsmittel sind mit Pfeilen bezeichnet.

### Weg zur Ausführung der Erfindung

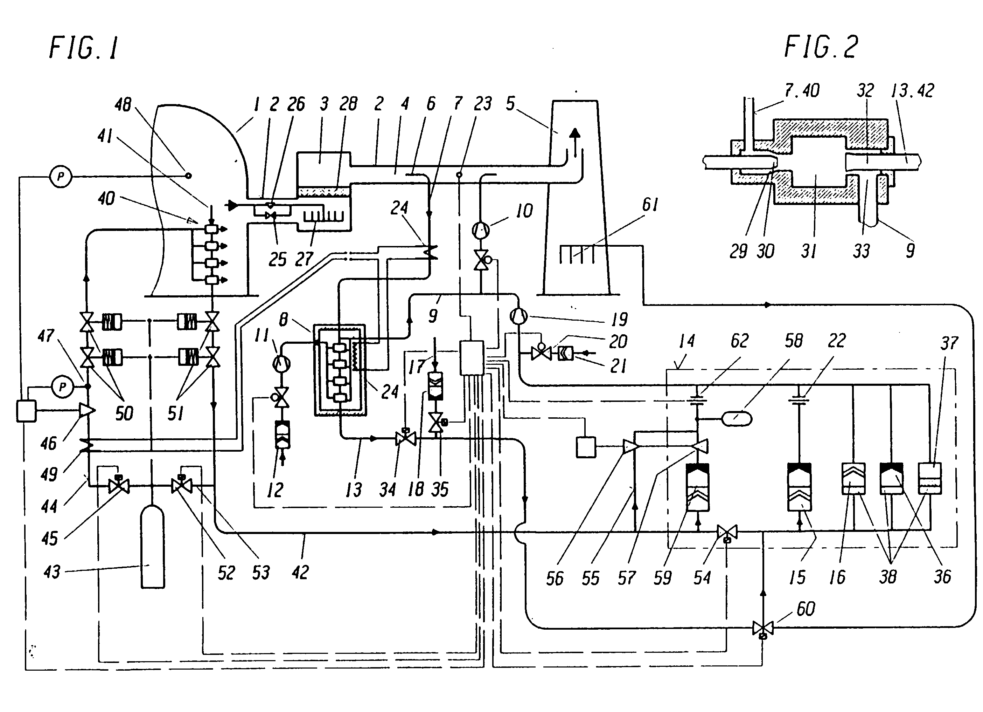

In der Figur 1 ist der Sicherheitsbehälter des Reaktors mit 1 bezeichnet. Eine Druckentlastungsleitung 2, nachstehend in ihrem ersten Teil Rohgasleitung genannt, führt vom Sicherheitsbehälter zur Filteranlage 3. In der Rohgasleitung sind in zwei parallelen Strängen eine Regelarmatur 25 und eine Berstscheibe 26 zur definierten Druckentlastung angeordnet. In der Rohgasleitung findet ebenfalls eine nichtdargestellte Durchsatzmessung statt. Die vorliegende Filteranlage arbeitet nach dem Nassfilterprinzip, was selbstverständlich nicht zwingend ist. In Venturi-Einbauten 27 wird das Wasser zerstäubt und reinigt dabei die Gase. Danach durchströmen die gereinigten Gase einen Wasserabscheiber 28. Sie treten dann in den zweiten Teil der Druckentlastungsleitung 2, nachstehend Reingasleitung 4 bezeichnet, ein, welche zum Kamin 5 führt.

In der Reingasleitung 4 ist eine Probeentnahme 6 angeordnet, aus der kontinuierlich eine Gasprobe entnommen und in eine Entnahmeleitung 7 eingeleitet wird. Als Beispiel sei angeführt, dass bei einer gesamten Abgasmenge von 20.000 m³/h etwa 10 m³/h abgezweigt werden. Diese Gasprobe wird mittels einer elektrisch oder durch Wärmetausch betriebenen Heizung 24 über vorzugsweise die ganze Länge der Entnahmeleitung 7 beheizt, um Kondensation zu vermeiden.

Aus der Entnahmeleitung wird ein Teilstrom der Verdünnungsanlage 8 zugeführt. Diese mehrstufig ausgebildete Anlage arbeitet mit einem bestimmten Volumenstrom partikelfreier Druckluft. Diese wird in einem Verdichter 11 bereitgestellt, welchem ein Jodfilter und ein Aerosolfilter 12 vorgeschaltet ist. Von den mehreren Verdünnungstufen werden im Prinzip nur die beiden ersten Stufen beheizt, da selbst bei reinem Dampf in der Reingasleitung 4 eine Taupunkttemperatur-Unterschreitung nach der zweiten Stufe nicht mehr möglich ist.

Stromabwärts der später zu beschreibenden Verdünnungsanlage 8 wird der Probestrom über die Messleitung 13 in die auch für den Normalbetrieb der Anlage vorgesehene eigentliche Messstrecke 14 geleitet. Vor der Messstrecke 14 ist die Messleitung 13 über ein Dreiwegeventil 60 mit einer dem Normalbetrieb dienenden Messleitung zusammengefasst. Letztere führt die permanent zu messenden Abgase, die aus dem Kamin 5 über einen Probeentnahmerechen 61 entnommen werden.

Die stark vereinfacht dargestellte Messstrecke 14 besteht zum einen aus einer Kombination 15 von Aerosol- und Jod-Bilanzierungsfiltern zur diskontinuierlichen Messung. Zur quasikontinuierlichen Überwachung sind ein Aerosolmonitor 16, ein Jodmonitor 36 und ein Edelgasmonitor 37 vorgesehen. Diese drei Monitoren sind mit je einem Strahlungsdetektor 38 ausgerüstet. Mit dieser blossen Anzeige wird die relative Aktivität der Aerosole erfasst. Sie bestimmt darüberhinaus die Wechselintervalle der Bilanzierungsfilter.

Im Normalbetrieb wird üblicherweise eine diskontinuierliche Messung über die Elemente 15 einmal pro Woche vorgenommen. Im Störfall hingegen ist vorgesehen, dass eine Messung alle 4 Stunden erfolgt. Hierzu werden die Bilanzierungsfilter ausgebaut, in einen separaten Raum gebracht und dort mittels Spektrometer nach spezifischen Nukliden ausgewertet.

Vorgängig der Messung wird die Messstrecke 14 durchgespült, damit die durch die Edelgaskomponenten verursachte Filteraktivität auf ein unmassgebliches Niveau herabgemindert wird und die eigentliche Messung nicht verfälscht. Hierzu wird die Messleitung 13 mittels eines Absperrorgans 34 verschlossen und die Spülluftleitung 17 mittels eines Absperrorgans 35 geöffnet. Über die Förderpumpe 19 wird athmosphärische Luft angesaugt und gelangt über Jod- und Aerosolfilter 18 in die Messstrecke. Ausgestossen wird die Spülluft in die Rückführleitung 9. Sie kann selbstverständlich auch direkt in den Kamin 5 abgeleitet werden.

Anlässlich der Messung selbst ist die Spülluftleitung 17 mit dem Absperrorgan 35 verschlossen und die Messleitung 13 mit dem Absperrorgan 34 geöffnet. Über die gleiche Förderpumpe 19 wird das zu messende Gemisch angesaugt. Da diese Pumpe für die grössere Spülluftmenge dimensioniert ist, wird im Falle der Messung zu Regelzwecken atmosphärische Luft mitangesaugt. Stromaufwärts der Pumpe befindet sich zu diesem Zweck in einer Zweigleitung ein Regelventil 20 mit vorgeschaltetem Aerosolfilter 21.

Vor der Einmündung der Teilmessstrecke mit dem Aerosolmonitor in jene mit den Bilanzierungsfiltern ist in letzterer ein Durchflussmessgerät 22 angeordnet. Die Durchflussmenge über die Aerosol- und Jodfilter wird dort gemessen und über die Bestaubungszeit integriert. Auf diese Weise werden die Aktivitätskonzentrationswerte ermittelt. Um die Aktivitätsabgaberate abzuleiten, wird die Konzentration mit der Durchsatzmessung korreliert.

Obwohl, wie oben erwähnt, der Durchsatz auch in der Rohgasleitung gemessen wird, würde eine Korrelation mit dieser Messung zu falschen Ergebnissen führen. Denn bei Druckentlastung können gerade in der Anfangsphase die Durchsätze in der Rohgasleitung und in der Reingasleitung sehr unterschiedlich sein. Dies kann zum Beispiel bedingt sein durch Auskondensation des Dampfteils in der noch kalten Wasservorlage der Filteranlage 3. Demzufolge wird der Durchfluss ein weiteres Mal bei 23 in der Reingasleitung 4 bestimmt. Dies kann eine Venturi-Messung oder eine Bestimmung über eine Druck/Temperaturmessung sein. Das Ergebnis wird mit den Konzentrationswerten verknüpft, um die Aktivitäts-Abgaberaten zu ermitteln.

Für die der oben beschriebenen Messung vorgängige Bestimmung der Aktivitätskonzentration innerhalb des Sicherheitsbehälters 1 wirken folgende Anlageteile: Im Sicherheitsbehälter ist eine mehrstufige Verdünnungsanlage 40 angeordnet. Die Probeentnahme ist mit dem Pfeil 41 angedeutet. Die aufbereitete Gasprobe wird in eine zur Messeinrichtung 14 führende Messleitung 42 eingeleitet. Das Verdünnungsgas, hier Druckluft oder Stickstoff, wird in einer ausserhalb des Sicherheitsbehälters angeordneten Druckflasche 43 bereitgestellt und über eine Zuführungsleitung 44 in die Verdünnungsanlage eingeleitet.

In dieser Zuführungsleitung 44 befinden sich neben einem Absperrorgan 45 ein Druckreduzierventil 46. Da bei einem Störfall im Sicherheitsbehälter Drücke zwischen 1 bis 7 bar auftreten können, muss der Druck des Verdünnungsgases in der Zuführungsleitung entsprechend angepasst werden. An das Stellgerät des Druckreduzierventils werden demnach die in der Zuführungsleitung bei 47 und im Sicherheitsbehälter bei 48 gemessenen Drücke angelegt.

Die Zuführungsleitung 44 ist mit einer Heizung 49 versehen, um die Verdünnungsluft auf zumindest annähernd das im Sicherheitsbehälter 1 herrschende Temperaturniveau aufzuwärmen.

Ferner sind Stellorgane 50, 51 in der Zuführungsleitung 44 und in der Messleitung 42 vorgesehen. Sie befinden sich in der Regel im freien Raum zwischen Sicherheitsbehälter und äusserer, nicht dargestellter Betonhülle. Sie sind gemäss Sicherheitsklasse 2 konzipiert und doppelt vorhanden. Zu Beginn der Messung ist darauf zu achten, dass die Stellorgane 50 in der Zuführungsleitung 44 vor den Stellorganen 51 in der Messleitung 42 geöffnet werden; bei Beendigung des Messvorgangs ist darauf zu achten, dass die Stellorgane in der Zuführungsleitung vor jenen in der Messleitung geschlossen werden. Mit dieser Massnahme wird verhindert, dass Gasgemisch mit zu hoher Aktivität über die Verdünnungsanlage 40 in die Messleitung 42 und von dort ins Freie gelangt.

Eine in Fig.2 dargestellte Verdünnungsstufe, welche sowohl für die Verdünnungsanlage 8 als auch für die Verdünnungsanlage 40 representativ ist, funktioniert folgendermassen: Die bereitgestellte Druckluft umströmt durch einen Ringspalt 29 die Ansaugdüse 30 für das zu verdünnende Gasgemisch. Durch den dabei entstehenden Unterdruck wird das Aerosol mit einem gewissen Volumenstrom angesaugt und in der Mischkammer 31 homogen mit der Reinluft vermischt. Wird der Reinluft-Volumenstrom erhöht, so vergrössert sich in gleichem Masse die Strömungsgeschwindigkeit im Ringspalt. Dadurch wächst der Unterdruck an der Ansaugdüse, wodurch der Volumenstrom des Gasgemisches ebenfalls zunimmt. Beide Volumenströme sind somit über den Unterdruck gekoppelt und ihr Verhältnis bleibt auch für verschiedene Vordrücke konstant.

Im der Verdünnungsanlage 8 wird eine Verdünnung von 1:10⁴ angestrebt, während in der Verdünnungsanlage 40 eine Verdünnung von 1:10⁶⁻⁷ durchgeführt wird. Dabei ist es vorteilhaft, die Verdünnung in mehreren Kaskaden vorzunehmen, was den Bedarf an sauberer Verdünnungsluft verringert. Von der aus der Entnahmeleitung 7 resp. der Probeentnahme 41 im Sicherheitsbehälter 1 entnommenen, verdünnten Probe wird nur ein Teil aus der Mischkammer 31 entnommen und der jeweils nächsten Stufe zugeführt. Diese Teilstromentnahme erfolgt über die Absaugdüse 32. Dabei ist darauf zu achten, dass diese Entnahme unter isokinetischen Bedingungen erfolgt. Diese liegen dann vor, wenn am Ort der Absaugung die Strömungsgeschwindigkeit in der Düse 32 gleich derjenigen im Strömungskanal ist. Über verschiedene Düsendurchmesser lassen sich verschiedene Absaugvolumenströme an verschiedene Gesamtvolumenströme anpassen. Dies ist für die letzte Stufe von Bedeutung. Als Beispiel sei vorgegeben, dass von der gesamten Menge nur 0,3 m³/h zur weiteren Verdünnung herangezogen werden. Nach der Verdünnung werden der Messapparatur somit insgesamt ca. 3 m³/h zugeführt. Die nach der isokinetischen Teilstrom-Entnahme verbleibende Restluft von 16.2 m³/h für alle 6 im Beispielsfall vorgesehenen Verdünnungsstufen (in Fig.1 sind nur je 4 Stufen dargestellt) strömt bei der Verdünnungsanlage 8 durch den Abluftstutzen 33 nach aussen in die Rückführleitung 9 (Fig.1). In dieser Rückführleitung wird der Rest der Probeluft und die Luft aus dem Abluftstutzen 33 von einer Pumpe 10 zurück in die Reingasleitung 4 gefördert. Bei dieser Rückführung ist darauf zu achten, dass in der Mischkammer der Verdünnungsstufe kein Gegendruck entsteht, welcher das Verdünnungsverhältnis beinflussen könnte. Bei der Verdünnungsanlage 40 wird die Restluft zurück in den Sicherheitsbehälter 1 verworfen, wie dies durch die Pfeile angedeutet ist.

Durch die Verdünnung wird die Aktivität der abgeschiedenen Stoffe auf ein auch bei Normalbetrieb übliches Mass abgesenkt. Die Handhabung und Auswertung der Messapparatur kann somit auch im Störfall in üblicher Weise geschehen.

An die Absaugdüse 32 der letzten Stufe ist bei der Verdünnungsanlage 8 die Messleitung 13 und bei der Verdünnungsanlage 40 die Messleitung 42 (Fig.1) angeschlossen, welche zur eigentlichen Messstrecke 14 führen.

Um bei einem Störfall sowohl die Kaminluft als auch die Atmosphäre innerhalb des Sicherheitsbehälters 1 unabhängig voneinander messen zu können, ist die Messstrecke 14 mit einem zusätzlichen Bilanzierungsfilter 59 und einem Durchflussmessgerät 62 ausgerüstet.

Der Aerosol- und Jod-Bilanzierungsfilter 59 ist mit einer zum Anfahren vorgesehen Umgehungsleitung 55 ausgerüstet. Die Messwerte des Durchflussmessgeräts 62 und ggfs. jene von nichtdargestellten Temperatur- und Druckmesssonden (die sich im gleichen Leitungsstrang wie das Durchflussmessgerät befinden) dienen als Stellgrössen für die gekoppelten Regelorgane 56, 57 in der Umgehungsleitung 55 und hinter dem Bilanzierungsfilter 59. Zum Anfahren wird bei geöffneter Umgehungsleitung 55 das Probeentnahmesytem mehrere Minuten betrieben. Dies gewährleistet, dass das gesamte System mit representativer Probeluft gespült ist. Nach dem Anfahrvorgang, bei dem der Entnahmevolumenstrom eingeregelt wurde, wird von der Umgehungsleitung 55 auf die Leitung zum Bilanzierugsfilter 59 umgeschaltet. Bei all diesen Vorgängen sind die Stellorgane 50 und 51 geöffnet.

Im Störfall wird die Probeentnahme diskontinuierlich nach Bedarf in Betrieb genommen. Anlässlich der Messung selbst ist die Spülleitung 53 mit dem Ventil 52 verschlossen. Die verdünnte Gasprobe wird nach durchgeführter Mengenregelung durch die Aerosol- und Jodfilter geführt. Wie beim oben besprochenen Verfahren wird die Durchflussmenge gemessen und über die Bestaubungszeit integriert. Gemessen werden Gasmengen zwischen 1 und 3 m³/h. Die Bestaubungszeit kann zwischen einer und mehreren Minuten betragen. Der nach der Messung bestaubte Filter 59 kann mit den für den Normalbetrieb zur Filterauswertung benützten Detektoren, z.B. Germanium-Detektoren, im Labor ausgewertet werden.

Stromabwärts der Bilanzierungsfilter ist zusätzlich eine Messstelle vorgesehen, um den Anteil an Edelgasen in der Probe zu ermitteln. Hierbei kann es sich um eine Gasflasche oder um eine sogenannte "Gasmaus" 58 handeln.

Nach der Messung wird die Messstrecke 14 durchgespült. Hierzu wird das ohnehin vorhandene Druckmittel aus der Flasche 43 herangezogen. In der Zuführungsleitung und der Messleitung sind die Organe 45 und 51 geschlossen. Das Verdünnungsgas wird bei offenem Reduzierventil 52 über die Spülleitung 53 in die Messleitung 42 und von dort durch die Messstrecke 14 gefördert. Da für die Messung nur die Bilanzierungsfilter 59 benötigt werden, kann für Spül- und Messzwecke auch die zu den Monitoren 36-38 führende Leitung mit dem Absperrorgan 54 geschlossen werden. Ausgestossen wird das Spülmedium in die Rückführleitung 9. Sie kann selbstverständlich auch direkt in den Kamin 5 abgeleitet werden. Es versteht sich, dass die Messstrecke auch in diesem Fall mit den oben beschriebenen Spülmitteln 17-19 und nach dem dortigen Verfahren durchgespült werden könnte.

## Patentansprüche

1. Vorrichtung zur Überwachung der Atmosphäre innerhalb des Sicherheitsbehälters (1) einer Reaktoranlage mittels einer für den Normalbetrieb vorgesehenen Messstrecke (14),
dadurch gekennzeichnet
- dass im Sicherheitsbehälter (1) eine Probeentnahme (41) vorgesehen ist, aus der im Störfall nach dem Absperren der üblichen Belüftungsanlage und vor der Inbetriebnahme der üblichen Druckentlastung Gasgemisch über eine Messleitung (42) durch die Messstrecke (14) geleitet und anschliessend verworfen wird,
- dass die Aktivitätskonzentration des Gases vor der Messstrecke (14) in einer im Sicherheitsbehälter angeordneten Verdünnungsanlage (40) reduziert wird,
- wozu Verdünnungsgas einer ausserhalb des Sicherheitsbehälters liegenden Quelle (43) entnommen wird und vor seiner Einführung in die Verdünnungsanlage dem jeweiligen Druck im Sicherheitsbehälter angepasst wird.

2. Vorrichtung nach Anspruch 1, dadurch gekennzeichnet, dass das Verdünnungsgas vor der Einführung in die Verdünnungsanlage (40) mittels einer Heizung (49) aufgewärmt wird.

3. Vorrichtung nach Anspruch 1, dadurch gekennzeichnet, dass die Verdünnung in mehreren Stufen erfolgt.

## Claims

1. Device for monitoring the atmosphere within the containment shell (1) of a reactor plant by means of a measuring zone (14) provided for normal operation,
characterized in that
- a sample removal means (41) is provided in the containment shell (1), from which, in the event of an accident, after the customary ventilation system is shut off and before the customary relief of pressure is initiated, a gas mixture is led via a measuring line (42) through the measuring zone (14) and subsequently discarded,
- in that the activity concentration of the gas is reduced upstream of the measuring zone (14) in a dilution plant (40) disposed in the containment shell,
- for which dilution gas is taken from a source (43) lying outside the containment shell and before its introduction into the dilution plant is matched to the particular pressure in the containment shell.

2. Device according to Claim 1, characterized in that the dilution gas is heated by means of a heater (49) before introduction into the dilution plant (40).

3. Device according to Claim 1, characterized in that the dilution takes place in several stages.

## Revendications

1. Installation de surveillance de l'atmosphère dans l'enceinte de confinement (1) d'un réacteur à l'aide d'une section de mesure (14) prévue pour le fonctionnement normal, caractérisée par le fait
- que l'enceinte de confinement (1) est munie d'un point de prélèvement (41) à partir duquel, en cas de défaillance, après la fermeture du reste de l'équipement de ventilation et avant la mise en service du dispositif de dépressurisation habituel, le mélange gazeux est acheminé par le biais d'une conduite de mesure (42) au travers d'une section de mesure (14) pour ensuite être rejeté,
- que la concentration de l'activité du gaz est réduite avant la section de mesure (14) dans un équipement réducteur (40) disposé dans l'enceinte de confinement,
- le gaz réducteur étant à cet effet prélevé d'une source (43) se trouvant en-dehors de l'enceinte de confinement et sà pression est adaptée à la pression dans l'enceinte de confinement avant sont injection dans l'équipement réducteur.

2. Installation conforme à la revendication 1, caractérisée par le fait que le gaz réducteur est chauffé avant son injection dans l'équipement réducteur (40) à l'aide d'un dispositif de chauffage (49).

3. Installation conforme à la revendication 1, caractérisée par le fait que la réduction s'effectue sur plusieurs étages.
